(19) Europäisches Patentamt
European Patent Office
Office européen des brevets

(11) **EP 0 811 641 B1**

(12) **EUROPÄISCHE PATENTSCHRIFT**

(45) Veröffentlichungstag und Bekanntmachung des Hinweises auf die Patenterteilung:
**06.10.1999 Patentblatt 1999/40**

(51) Int Cl.$^6$: **C08F 14/22**

(21) Anmeldenummer: **97108373.8**

(22) Anmeldetag: **23.05.1997**

(54) **Fluorkautschuk**

Fluorinated Rubber

Caoutchouc fluoré

(84) Benannte Vertragsstaaten:
**AT CH DE ES FR GB IT LI SE**

(30) Priorität: **03.06.1996 DE 19622188**

(43) Veröffentlichungstag der Anmeldung:
**10.12.1997 Patentblatt 1997/50**

(73) Patentinhaber: **BAYER AG**
**51368 Leverkusen (DE)**

(72) Erfinder:
• **Krüger, Ralf, Dr.**
**51061 Köln (DE)**
• **Ackermann, Jürgen, Dr.**
**51381 Leverkusen (DE)**
• **Wrobel, Dieter, Dr.**
**51375 Leverkusen (DE)**
• **Steinberger, Helmut, Dr.**
**51375 Leverkusen (DE)**

(56) Entgegenhaltungen:
EP-A- 0 101 930          EP-A- 0 398 241
WO-A-94/07929          FR-A- 2 386 561

• DATABASE "CHEMICAL ABSTRACTS" (HOST: STN): Abs. 104: 131 219 Colombus, OH, USA; & JP-A-60 221 409(ASAHI CHEM. IND.CO.,Ltd) 6 NOVEMBER 1985 XP002036016

**Beschreibung**

Die vorliegende Erfindung betrifft einen neuen Fluorkautschuk, ein Verfahren zur Herstellung und seiner Verwendung sowie ein Verfahren zur Herstellung von Fluorelastomer-Formkörpern und/oder Beschichtungen.

In der Gummiindustrie besteht ein genereller Wunsch nach besserer Verarbeitbarkeit der eingesetzten Kautschuke. Insbesondere betrifft dies die Fließeigenschaften. Je niedrigviskoser der Kautschuk ist, desto einfacher ist die Verarbeitungstechno-. logie, desto größer ist die Produktivität und desto geringer ist der Abfall. Die genannten Aspekte sind insbesondere bei Fluorkautschuken von großer Relevanz, da es sich hierbei um teure Kautschuke handelt, die nicht durchgehend auf Spritzgießmaschinen der Gummiindustrie verarbeitet werden können.

Fluorkautschuke mit Mooney-Viskositäten ($ML_{1+10}$ bei 120°C) > 60 können meist nur durch Preß- oder Transfer-Molding-Verfahren verarbeitet werden. Fluorkautschuke mit Mooney-Viskositäten ≤60 können zwar auf speziellen Spritzgießmaschinen für Festkautschuke verarbeitet werden, jedoch erfordert dies lange Zykluszeiten und ist zudem mit einem erheblichen Anteil an Abfall (Flash-out) verknüpft.

Bekannt sind Kautschuke mit Mooney-Viskositäten ($ML_{1+10}$ bei 120°C) von 20-60 Mooney-Einheiten, die nach diesem Prinzip zu Formpreßteilen verarbeitet werden können. Diese Kautschuke weisen noch keine deutliche Verschlechterung der gummimechanischen Eigenschaften auf [P. Ferrandez, St. Bowers, Gummi Fasern Kunstst. 48 (1995) 626-633].

Eine stärkere Verminderung des Molgewichtes zum Zwecke der Viskositätserniedrigung darüberhinaus führt aber bei Kautschuken, insbesondere bei Fluorkautschuken zu einer Verschlechterung der Vulkanisateigenschaften, insbesondere der Festigkeit. Flüssig-Fluorkautschuke, die über ein zufriedenstellendes Eigenschaftsprofil verfügen, sind nicht bekannt.

Zudem ist die Lagerstabilität heute noch bei vielen Mischungen ein Problem. So sind z.B. die in US-A 4361678 beschriebenen niedrigmolekularen Fluorkautschuke mit Iodgehalten zwischen 1 und 30 Gew %, die einen Molekulargewichtsregler vom Typ $Rf/I_x$ enthalten, wobei Rf einen Perfluorkohlenstoff-, Perfluorchlorkohlenstoff- oder Fluorchlorkohlenwasserstoffrest darstellt, nicht lagerstabil. Die fehlende Lagerstabilität resultiert dabei wahrscheinlich daraus, daß in dem Regler das Iodatom an einem mindestens ein Fluoratom enthaltenden Kohlenstoffatom, bevorzugt an einem Perfluorkohlenstoffrest gebunden ist und somit mindestens die Hälfte der resultierenden Endgruppen die Struktur -Rf-I, z.B. $-CF_2-I$ aufweisen. In solchen Gruppen ist die Iod-Kohlenstoff-Bindung besonders labil und es kann thermisch oder lichtinduziert sehr leicht Iod abgespalten werden. Dadurch wird die Handhabung der Fluorpolymere mit hohen Iodgehalten sehr erschwert. Zudem können die für die Vernetzung vorgesehenen Reaktivgruppen vorzeitig abreagieren bzw. die dabei entstehenden polymeren Radikale rekombinieren. Daraus hergestellte vernetzte Formkörper zeigen zudem schlechte Alterungseigenschaften, siehe V. Arcella et al., Kautsch. Gummi, Kunstst. 44 (1991) 833-837.

Regler, die mindestens ein Iod- oder Bromatom an einer $CH_2$-Gruppe enthalten, wie z.B. in JP-A 60 221 409 bzw. EP-A 101 930 beschrieben, haben laut WO 94/07929 den Nachteil, daß sie die Polymerisation sehr stark retardieren. Diese wurden bislang nur eingesetzt, um Fluorkautschuke mit hohem Molekulargewicht bzw. niedrigen Iodgehalten herzustellen.

Daher bestand ein Bedarf an Flüssig-Fluorkautschuken, die zumindest bei leicht erhöhten Temperaturen (60-120°C) pumpbar sind und auf herkömmlichen Thermoplastverarbeitungsmaschinen verarbeitbar sind. Zudem sollten diese Flüssig-Fluorkautschuke lagerstabil und leicht vernetzbar sein und die resultierenden Gummiteile gute mechanische sowie Alterungs-Eigenschaften besitzen, die denen von herkömmlichen Fest-Fluorkautschuken sehr nahe kommen.

Aufgabe der vorliegenden Erfindung war daher die Bereitstellung von Fluorkautschuken, die dieses Eigenschaftsprofil aufweisen.

Es wurde nun gefunden, daß Fluorkautschuk, aus den essentiellen Bestandteilen Vinylidenfluorid und mindestens einer Verbindung aus der Gruppe Diiodmethan, 1,2-Diiod-1,1-difluorethan, 1-Iod-2-brom-1,1-difluorethan, 1-Brom-2-iod-1,1-ditluorethan und/oder 1,2-Dibrom-1,1-difluorethan, der bestimmte Anteile an der Endgruppe der Formel $-CH_2-X$ mit X = Br und/oder Iod sowie Gehalte an Iod und/oder Brom von 1 - 5 Gew.-% aufweist und einer bestimmten Viskosität, diese Aufgabe löst.

Gegenstand der vorliegenden Erfindung ist daher ein Fluorkautschuk aus a) Vinylidenfluorid und gegebenenfalls weiterer fluorhaltiger und/oder nicht-fluorhaltiger Monomeren und b) mindestens einer Verbindung aus der Gruppe Diiodmethan, 1,2-Diiod-1,1-difluorethan, 1-Iod-2-brom-1,1-difluorethan, 1-Brom-2-iod-1,1-difluorethan und/oder 1,2-Dibrom-1,1-difluorethan, in dem mindestens 80 % der Endgruppen die Formel $-CH_2-X$ mit X = Br und/oder I aufweisen, der Gehalte an Iod und/oder Brom von 1 - 5 Gew.-% , vorzugsweise 1 bis 4 Gew.-%, besonders bevorzugt 2 bis 3 Gew.-% aufweist und der eine komplexe Viskosität bei 100°C und ω = 6,3 $s^{-1}$ von 0,01-30 kPas sowie einen Temperaturindex, berechnet als Quotienten der Viskositäten bei 40 und 100°C von 3-250 besitzt.

Fluorhaltige Monomere im Sinne der Erfindung sind vorzugsweise fluorierte, gegebenenfalls substituierte Ethylene, die neben Fluor Wasserstoff und/oder Chlor enthalten können, wie z.B. Vinylidenfluorid, Tetrafluorethylen und Chlortrifluorethylen, fluorierte 1-Alkene mit 2-8 Kohlenstoffatomen, wie z.B. Hexafluorpropen, 3,3,3-Trifluorpropen, Chlorpentafluorpropen, Pentafluorpropen, Hexafluorisobuten und/oder perfluorierte Vinylether der Formel $CF_2=CF-O-X$ mit $X = C_1-C_3$-Perfluoralkyl oder $-(CF_2-CFY-O)_n-R_F$, wobei n = 1-4, Y = F oder $CF_3$ und $R_F = C_1-C_3$-Perfluoralkyl bedeuten.

Nicht-fluorhaltige Monomere im Sinne der Erfindung sind dabei vorzugsweise Ethylen, Propen, Isobuten oder Vinylester, wie z.B. Vinylacetat.

In dem erfindungsgemäßen Fluorkautschuk ist Komponente a) vorzugsweise ein Gemisch von Vinylidenfluorid mit weiteren fluorhaltigen und/oder nicht-fluorhaltigen Monomeren.

Besonders bevorzugt ist die Kombinationen aus Vinylidenfluorid, Hexafluorpropen sowie gegebenenfalls Tetrafluorethylen und/oder perfluorierten Vinylethern, wie z.B. Perfluor-(methyl-vinyl-ether).

Verbindung b) ist vorzugsweise Diiodmethan.

Die Verbindungen b) sind leicht zugänglich, z.B. durch Halogen- oder Interhalogenaddition an Vinylidenfluorid.

Vorzugsweise besitzen mehr als 90 % der Endgruppen die Formel $-CH_2X$ mit X = Iod- oder Brom. Die Zahlenmittel der Molekulargewichte Mn liegen vorzugsweise zwischen 30 000 und 3000 g/mol, besonders bevorzugt 20 000 bis 5000 g/mol, ganz besonders bevorzugt 13 000 - 6000 g/mol.

Wie $^{19}$F- und $^1$H-NMR-spektroskopisch nachgewiesen werden konnte, enthält der erfindungsgemäße Fluorkautschuk keine Gruppen der Formel $-CF_2-I$ oder $>CF-I$, an denen thermisch oder lichtinduziert besonders leicht Iod abgespalten werden könnte.

In einer bevorzugten Ausführungsform der Erfindung werden dem erfindungsgemäßen Fluorkautschuk Füllstoffe, wie z.B. Ruß, Kieselsäure, $TiO_2$ (füllstoffhaltige Mischung) und/oder Vernetzungschemikalien, d.h. Katalysator und Covernetzer (vernetzungsfähige und gegebenenfalls füllstoffhaltige Mischung), wie z.B. ein organisches Peroxid und ein Triallylisocyanurat (siehe z.B. EP-A 398 241) oder Bisamine/Bisphenole in Kombination mit Phasentransferkatalysatoren und Metalloxiden, wie in A.L. Lugothetis, Polym. Sci., Band 14, (1989), 251-296 beschrieben, zugemischt.

Die erfindungsgemäßen Fluorkautschuke bzw. daraus hergestellte füllstoffhaltige Mischungen besitzen bei Raumtemperatur noch eine den bekannten Festkautschuken ähnliche Konsistenz d.h. höhere Viskosität, und zeigen bei Temperaturerhöhung eine starke Viskositätserniedrigung. Im Temperaturbereich zwischen 60°C und 120°C verfügen sie über eine quasi flüssige Konsistenz. Die komplexen Viskositäten, gemessen mit einem Bohlin-Rheometer des Typs VOR-Melt (Kreisfrequenz $\omega = 6,3$ s$^{-1}$), jeweils in kPa s liegen vorzugsweise in folgenden charakteristischen Bereichen:

| Viskosität, $\omega = 6,3$ s$^{-1}$ [kPa.s] | 40°C | 100°C |
|---|---|---|
| Fluorkautschuk | 1-100 | 0,01-30 |
| (Fluorkautschuk + 30 Gew.-Tle. Ruß MTN 990) | 10-200 | 0,1-50 |

Entsprechend liegt der Temperaturindex, berechnet als Quotient der Viskositäten bei 40 und 100°C, bevorzugt bei 3 bis 250 für den Fluorkautschuk bzw. bei 3 - 300 für den füllstoffhaltigen Fluorkautschuk (füllstoffhaltige Mischung).

In einer Ausführungsform der Erfindung wird der erfindungsgemäße Fluorkautschuk zu gummielastischen Formkörpern vernetzt. Dies geschieht vorzugsweise radikalisch durch Strahlung oder mittels Peroxiden. Auch die füllstoffhaltigen oder auch vernetzungsfähigen und gegebenenfalls füllstoffhaltigen Mischungen können vorzugsweise durch Strahlung oder mittels Peroxiden zu gummielastischen Formkörpern vernetzt werden.

Weiterer Gegenstand der Erfindung ist ein Verfahren zur Herstellung des erfindungsgemäßen Fluorkautschuk, in dem a) Vinylidenfluorid mit gegebenfalls einem weiteren fluorhaltigen oder nichtfluorhaltigen Monomer in Gegenwart von b) mindestens einer iod- und/oder bromhaltigen Verbindung aus der Gruppe Diiodmethan, 1,2-Diiod-1,1-difluorethan, 1-Iod-2-brom-1,1-difluorethan, 1-Brom-2-iod-1,1-difluorethan und/oder 1,2-Dibrom-1,1-difluorethan bei Temperaturen von 0-70°C, bevorzugt 0-60°C, in Gegenwart eines Initiators und/oder weiteren Hilfsstoffen, vorzugsweise eines Redoxinitiatorsystems, radikalisch polymerisiert wird.

Die Polymerisation kann in Lösung, Suspension oder Emulsion durchgeführt werden. Bevorzugt ist dabei die Polymerisation in wäßriger Emulsion in Gegenwart eines Redoxinitiators.

Die Menge an Komponente b) beträgt mindestens 1 bis 5 Gew.-%, bezogen auf die umzusetzenden Fluormonomere.

Als Medium für die Lösungspolymerisation kann ein Lösungsmittel mit geringer Übertragungskonstante, wie z.B. Hexafluorcyclopentan, Perfluorhexan, Perfluor(tributylamin) oder Trichlortrifluorethan dienen.

Als Initiator werden vorzugsweise im Monomer oder Lösungsmittel lösliche organische gegebenenfalls fluorierte Peroxide, wie z.B. tert.-Butylperpivalat, Diisopropyl-peroxidicarbonat bzw. Trifluoracetylperoxid oder Azoverbindungen wie Azo-bis-(isobutyronitril) bzw. Azo-bis(2,4-dimethylvaleronitril) eingesetzt.

Im Falle der wäßrigen Emulsionspolymerisation werden als Hilfsstoffe vorzugsweise fluorierte Emulgatoren, wie beispielsweise die wasserlöslichen Salze der $C_6$-$C_{12}$-Perfluorcarbonsäuren oder -sulfonsäuren, zur Stabilisierung der Dispersionen in Konzentrationen von 0,05 bis 2 Gew.-% eingesetzt. Beispielhaft seien hier die Natrium- oder Ammoniumsalze der Perfluoroctansäure und das Lithiumsalz der Perfluoroctylsulfonsäure genannt.

Als Initiatoren können auch anorganische Peroxide, wie z.B. Peroxidisulfate, Perborate, Percarbonate, im allgemeinen in Form ihrer Kalium-, Natrium- oder Ammoniumsalze, vorzugsweise in Kombination mit Reduktionsmitteln eingesetzt werden. Als solche Reduktionsmittel können dienen: Schwefelverbindungen, wie Natriumsulfit, Natriumpyrosulfit oder Rongalit C (Natriumformamidinsulfinsäure), weiterhin organische Reduktionsmittel, wie Ascorbinsäure, Metallsalze, wie Eisen-. (II)- oder Kobalt-(II)-Salze, metallorganische Verbindungen etc. Als Redoxinitiatorsystem ist ein System, bestehend aus mindestens einer Manganverbindung in Oxidationsstufen ≥ 3 und gegebenenfalls einem Reduktionsmittel, wie z.B. Carbonsäuren, Dicarbonsäuren, mehrwertigen Alkoholen und Hydroxycarbonsäuren, bevorzugt.

Die Herstellung der erfindungsgemäßen Fluorkautschuke kann absatzweise, bevorzugt aber nach halbkontinuierlichen oder kontinuierlichen Verfahren erfolgen.

Es wird unter autogenem Druck gearbeitet, der sich in Abhängigkeit vom Reaktorfüllgrad, der Temperatur und den Monomermengen einstellt.

Ein weiterer Gegenstand der Erfindung ist die Verwendung des erfindungsgemäßen Fluorkautschuks zur Herstellung von Beschichtungen oder für polymeranaloge Umsetzungen zur Substitution der Iod- oder Bromendgruppen vorzugsweise durch andere Reaktivgruppen. Auch die füllstoffhaltigen oder vernetzungsfähigen und gegebenenfalls füllstoffhaltigen Mischungen können zur Herstellung von Beschichtungen oder für polymeranaloge Umsetzung zur Substitution der Iod- oder Bromgruppen durch andere Reaktivgruppen mittels nucleophiler oder radikalischer Substitution verwendet werden.

Die Iod- und Bromgruppen werden vorzugsweise durch Umsetzung mit Verbindungen, die primäre oder sekundäre Aminogruppen, Allyl- oder Vinylgruppen sowie alkylierbare aromatische Reste enthalten, substituiert.

Ebenfalls Gegenstand der Erfindung ist ein Verfahren zur Herstellung von Fluorelastomer-Formkörpern und/oder Beschichtungen, wonach erfindungsgemäße Fluorkautschuke mit einem Temperaturindex der Viskosität bei 40/100°C von 3 bis 250, bei Temperaturen von 40 bis 250°C unter Druck, vorzugsweise 20 bis 200 bar, in 100 bis 250°C, vorzugsweise 120 bis 200°C, heiße Formen spritzgegossen und dort vernetzt werden.

Das Spritzgießen erfolgt auf handelsüblichen Thermoplast-Spritzguß- oder Kolbendosiermaschinen, wie sie z.B. Ullmann Bd. 11 (1960) S.63 beschrieben sind. Vorzugsweise wird der Fluorkautschuk auf 40 bis 250°C aufgeheizt in die Thermoplast-Spritzguß- oder Kolbendosiermaschine eingeführt. Dafür eignen sich besonders beheizte Dosier- und Fördermaschinen, vorzugsweise beheizte Schöpfkolbenpumpen.

Als Fluorkautschuk wird dabei der erfindungsgemäße Fluorkautschuk oder ein Gemisch aus mehreren erfindungsgemäßen Fluorkautschuken eingesetzt.

Ebenfalls eingesetzt werden können füllstoffhaltige Mischungen oder vernetzungsfähige und gegebenenfalls füllstoffhaltige Mischungen.

Die verbesserte Fließfähigkeit erlaubt den Einsatz von vernetzenden bzw. die Vernetzung aktivierenden/auslösenden Chemikalien, wie z.B. Peroxide, Basen oder Initiatoren mit erhöhter Reaktionsgeschwindigkeit. Diese bewirken im Rheometer einen Vernetzungsverlauf mit Halbwertzeiten für 50 %igen Anstieg des Schubmoduls, genannt t50, von 1 bis 20 min bei 100°C.

In der 100 bis 250°C heißen Form können die Fluorkautschuke z.B. direkt über die endständigen Iod- oder Bromatome als Reaktivgruppen vernetzt werden. Dies kann auf dem üblichen radikalischen Wege durch radikalbildende Substanzen, wie organische Peroxide oder durch nucleophile Substitution des endständigen Iods, beispielsweise mittels polyfunktionellen Aminen, erfolgen.

Desweiteren können die endständigen Iodatome auch durch andere Reaktivgruppen ersetzt und anschließend vernetzt werden. Dazu können beispielsweise nukleophile Substitutionsreaktionen, wie eine Aminierung oder Verseifung dienen. Endständige C-C-Doppelbindungen lassen sich z.B. durch radikalische Addition von Allylacetat mit anschließender Eliminierung einführen.

Der erfindungsgemäße Fluorkautschuk stellt insofern eine Besonderheit dar, da er sich mit der vorteilhaften Technologie der Flüssigkautschukverarbeitung zu vernetzen Formteilen oder Beschichtungen einsetzen läßt.

Die Kombination aus guter Fließfähigkeit und hoher Vernetzungsgeschwindigkeit für kovalent vernetzte Elastomere konnte man bisher nur bei Flüssigsilikon-Kautschuk nutzen, um die Zykluszeiten für die Herstellung elastomerer Formkörper zu verkürzen.

**Ausführungsbeispiele:**

**Beispiel 1**

In einem 36-1-Autoklaven wurden 25,2 kg entionisiertes Wasser und 60,2 g Lithiumperfluoroctylsulfonat vorgelegt. Darin wurden 40 g Oxalsäure-Dihydrat und 31 g Diiodmethan (DIM) (Fa. Merck) gelöst, wobei sich in der gesamten wäßrigen Vorlage ein pH-Wert von 3,2 einstellte. Der geschlossene Autoklav wurde viermal jeweils evakuiert anschließend mit 3 bar Stickstoffdruck beaufschlagt und jeweils 10 min langsam gerührt. In den evakuierten Autoklaven wurden 269 g Vinylidenfluorid (VDF) und 368 g Hexafluorpropen (HFP) gegeben und das Reaktionsgemisch unter Rühren auf 25°C erwärmt. Nach Erreichen dieser Temperatur betrug der Autoklaveninnendruck 9,4 bar. Die Polymerisation wurde eingeleitet durch die Zugabe von 53 ml einer wäßrigen Lösung, die 20g/l Kaliumpermanganat enthielt. Sofort nach der einmaligen Zugabe wurde die besagte Kaliumpermanganat-Lösung kontinuierlich mit einer Rate von 39 ml/h weiterdosiert. An der beginnenden Druckabnahme erkennbar, setzte die Polymerisation nach 26 min ein. Während der Polymerisation wurde ein Monomergemisch aus 60 Gew.-% Vinylidenfluorid und 40 Gew.-% Hexafluorpropen so nachgedrückt, daß der Autoklaveninnendruck konstant auf $9,4 \pm 0,2$ bar gehalten wurde. Außerdem wurden nach jeweils 200 g Monomerumsatz 30 ml einer Lösung von Diiodmethan in 1,1,2-Trichlor-1,2,2-trifluorethan (100 g/l) zugegeben. Innerhalb einer Reaktionszeit von 15 h wurden auf diese Weise insgesamt 944 g Vinylidenfluorid und 622 g Hexafluorpropen sowie 45 g Diiodmethan (DIM) zugepumpt. Zur Beendigung der Polymerisation wurde die Permanganatdosierung abgebrochen, das nicht umgesetzte Monomergemisch durch Entspannung und Evakuierung aus dem Reaktor entfernt und der verbleibende Autoklaveninhalt abgekühlt. Aus dem Latex wurden durch Gefrierkoagulation, Wäsche und Trocknung für 24 h bei 50°C in einem Vakuumtrockenschrank 1 340 g eines weichen kautschukartigen Copolymers isoliert.

Durch 19F-NMR-Analysen wurde folgende Copolymerzusammensetzung bestimmt: 19,8 mol-% Hexafluorpropen, 80,2 mol-% Vinylidenfluorid. Im Bereich der chemischen Verschiebung (Lösungsmittel: Aceton; Standard: $CFCl_3$) für die $-CH_2\text{-}\underline{CF_2}\text{-I}$ -Gruppe bei -38 ... -39 ppm wird kein Signal beobachtet, ebensowenig tritt im Bereich zwischen -70 und -80 ppm ein neues Signal auf, das der Sequenz $-CF_2\text{-}CFI(\underline{CF_3})$ zugeordnet werden kann. Dafür treten zwei neue Signale bei -108,1 und -111,8 ppm auf, die den Sequenzen $-CH_2\text{-}\underline{CF_2}\text{-}CH_2\text{-I}$ bzw. $-CH_2\text{-}\underline{CF_2}\text{-}CH_2\text{-}CH_2\text{-I}$ zuzuordnen sind.

Der durch Elementaranalyse bestimmte Iodgehalt des Polymers beträgt 2,7 Gew.-%. In Methylethylketon wurde ein Staudingerindex [η] bei 35°C von 0,12 dl/g bestimmt. Das Zahlenmittel der Molekulargewichte (Membranosmose) liegt bei 10 000 g/mol.

An einem Bohlin-Rheometer des Typs VOR MELT wurden bei verschiedenen Temperaturen die komplexen Viskositäten gemessen, Tabelle 1.

**Beispiele 2-3**

Die Polymerisation wurde in analoger Weise wie im Beispiel 1 durchgeführt, wobei folgende Mengen Vinylidenfluorid, Hexafluorpropen und Diiodmethan (DIM) innerhalb von 15 h nachdosiert wurden:

| Beispiel | 2 | 3 |
|---|---|---|
| VDF [kg] | 1,8 | 0,95 |
| HFP [kg] | 1,2 | 0,62 |
| DIM [g] | 90 | 60 |
|  |  |  |
| Produktausbeute [kg] | 2,49 | 1,41 |
| Iodgehalt [Gew.-%] | 2,4 | 3,0 |
| [h] bei 35°C * [dl/g] | 0,17 | 0,13 |

* in Dimethylacetamid (+8,7 g/l LiBr)

In den 19F-NMR-Spektren konnte wie im Beispiel 1 beschrieben kein Hinweis auf das Auftreten von $-CF_2\text{-I}$ -Sequenzen gefunden werden.

**Beispiele 4-6**

Zur Herstellung von vernetzungsfahigen Mischungen wurden auf einem Zweiwalzenmischwerk auf 100 Gew.-Tle. der Fluorkautschuke aus den Beispielen 1-3 30 Tle. Ruß MT N 990, 3 Tle. Calciumhydroxid, 3 Tle. Perkalink 301/50 (Triallylisocyanurat, 50 %ig in inaktiven Füllstoffen) sowie 3 Tle. Luperco 101 XL-45 (2,5-Dimethyl-2,5-bis(tertiärbutylperoxy)-hexan; 45 %ig in inaktiven Füllstoffen) eingearbeitet. Teilmengen der Compounds wurden vor der Zugabe des Peroxids abgenommen und ebenso wie der Fluorkautschuk aus dem Beispiel 1 zur Bestimmung der komplexen Viskositäten eingesetzt, Tabelle 1.

Tabelle 1

| Komplexe Viskositäten ($\eta^*$) bei verschiedenen Temperaturen, gemessen mit einem Bohlin-Rheometer VOR-Melt (Kreisfrequenz $\omega = 6{,}3\ \text{s}^{-1}$), jeweils in kPa s | | | | |
|---|---|---|---|---|
| Beispiel | 1 | | 2 | 3 |
| | Fluorkautschuk | Compound | Compound | Compound |
| 40°C | 12,5 | 26,8 | 82,7 | 52,2 |
| 80°C | 0,42 | 1,3 | 1,71 | 0,49 |
| 100°C | 0,16 | 0,66 | 0,42 | 0,30 |
| 120°C | | | 0,19 | 0,23 |
| 140°C | | | 0,16 | 0,18 |
| 160°C | 0,03 | 0,31 | | |
| $\frac{\eta^*(40°C)}{\eta^*(100°C)}$ | 78,1 | 40,6 | 196,9 | 174,0 |

Zur Bestimmung des Vernetzungsverhaltens wurden die peroxidhaltigen Mischungen in einem Monsanto-Rheometer des Typs MDR 2000 E bei 170 untersucht (Meßzeit 30 min):

| Beispiel | 4 | 5 | 6 |
|---|---|---|---|
| Fluorkautschuk | 1 | 2 | 3 |
| s' min [dNm] | ≤0,01 | ≤0,01 | ≤0,01 |
| s' max [dNm] | 9,9 | 6,8 | 5,4 |
| t 50 [min] | 2,6 | 3,0 | 3,4 |

Die Mischungen wurden bei 170°C und 200 bar in Formen für 1x10x10 mm Platten und 6 x 70 mm Zylinder 30 min druckvulkanisiert und anschließend in einem Umluftofen nachvulkanisiert (1 h bei 160°C, 1 h bei 170°C, 2 h bei 180°C und 20 h bei 230°C). An den vulkanisierten Formkörpern wurden die Zug-/Dehnungseigenschaften vor und nach Heißluftalterung (72 h / 275°C) bzw. Ölalterung (5x94 h in BP MK 4437 bei 160°C) sowie die Druckverformungsreste (DVR) (70 h / 200°C, DIN 53 517, Probekörper I) bestimmt, Tabelle 2.

Tabelle 2

| Beispiel | 4 | 5 | 6 |
|---|---|---|---|
| **Ausgangsmechanik** | | | |
| Zugfestigkeit [N/mm$^2$] | 11,9 | 7,9 | 7,7 |
| Dehnung [%] | 217 | 174 | 167 |
| $S_{50}$ [N/mm$^2$] | 4,9 | 2,7 | 3,8 |
| **nach Heißluftalterung (70h/275°C)** | | | |
| Zugfestigkeit [N/mm$^2$] | 8,6 (-28%) | 5,6 (-29%) | 5,2 (-32%) |
| Dehnung [%] | 112 (-48%) | 80 (-54%) | 75 (-55%) |
| $S_{50}$ [N/mm$^2$] | 3,9 (-20%) | 3,3 (+22%) | 3,9 (+3%) |
| **DVR (70h / 200°C)** | | | |
| vor/nach [%] Heißluftalterung | 8 / 6 | 16 / 9 | 9 / 9 |
| **Ölalterung** in BP MK 4437 **(5 x 94 h / 160°C)** | | | |
| Gewichtszunahme [%] | 0,09 | 0,10 | 0,09 |

Tabelle 2   (fortgesetzt)

| Beispiel | 4 | 5 | 6 |
|---|---|---|---|
| **Ölalterung** in BP MK 4437 **(5 x 94 h / 160°C)** | | | |
| Zugfestigkeit [N/mm$^2$] | 9,5 (-20%) | 6,7 (-15%) | 6,6 (-14%) |
| Dehnung [%] | 126 (-42%) | 108 (-38%) | 103 (-38%) |
| S$_{50}$ [N/mm$^2$] | 4,8 (-2%) | 3,2 (+19%) | 3,4 (-11%) |

Die Werte zeigen, daß aus den Fluorkautschuken der Beispiele 1, 3 und 4 trotz ihrer niedrigen Ausgangsmolekulargewichte vernetzte Formkörper mit ausgezeichneten Alterungseigenschaften hergestellt werden können.

**Beispiel 7**

Die Polymerisation wurden in analoger Weise wie im Beispiel 1 durchgeführt, wobei jedoch 476 g Vinylidenfluorid und 671 Hexafluorpropen vorgelegt wurden. Der Anfangsdruck stellte sich dadurch auf 15,9 bar ein. Es wurden folgende Mengen innerhalb von 12 h nachdosiert:

| VDF [g] | 800 |
|---|---|
| HFP [g] | 530 |
| DIM [g] | 45 |
| Produktausbeute [kg] | 1,24 |

Der Iodgehalt des resultierenden Copolymers beträgt 4,0 Gew.-%. In N,N-Dimethylacetamid (+8,7 g LiBr) wurde ein Staudingerindex [h] bei 35°C von 0,11 dl/g bestimmt.

**Beispiel 8**

100 Gew.-Tle. des Fluorkautschuks aus Beispiel 7 wurden analog wie in den Beispielen 4-6 beschrieben mit 30 Tln. Ruß MT N 990, 3 Tln. Calciumhydroxid und 10 Tln. Perkalink 301/50 (Triallylisocyanurat, 50 %ig in inaktiven Füllstoffen) sowie 3 Tln. Luperco 101 XL (2,5-Dimethyl-2,5-bis(tertiärbutylperoxy)-hexan; 45 %ig in inaktiven Füllstoffen) eingearbeitet.

Zur Bestimmung des Vernetzungsverhaltens wurde die peroxidhaltige Mischung in einem Monsanto-Rheometer des Typs MDR 2000 E bei 170°C untersucht (Meßzeit 30 min), Tabelle 3.

**Vergleichsbeispiel 1**

In einem 4,1-1-Autoklaven wurden 2,78 kg entionisiertes Wasser und 4,5 g Lithiumperfluoroctylsulfonat vorgelegt. Darin wurden 40 g 1,4-Diiod-perfluorbutan (der Firma Fluorochem Ltd.) nach vorheriger Reinigung durch Ausschütteln mit wäßriger Natriumthiosulfatlösung gelöst. Der geschlossene Autoklav wurde viermal jeweils evakuiert anschließend mit 3 bar Stickstoffdruck beaufschlagt und jeweils 10 min langsam gerührt. In den evakuierten Autoklaven wurden 27 g Vinylidenfluorid und 53 g Hexafluorpropen gegeben und das Reaktionsgemisch unter Rühren auf 80°C erwärmt. Nach Erreichen dieser Temperatur betrug der Autoklaveninnendruck 15 bar. Die Polymerisation wurde eingeleitet durch die Zugabe von 2,8 g Ammoniumperoxidisulfat, gelöst in 20 g Wasser. An der beginnenden Druckabnahme erkennbar, setzte die Polymerisation nach 7 min ein. Während der Polymerisation wurde ein Monomergemisch aus 60 Gew.% Vinylidenfluorid und 40 Gew.% Hexafluorpropen so nachgedrückt, daß der Autoklaveninnendruck konstant auf 17 ± 0,2 bar gehalten wurde. Innerhalb einer Reaktionszeit von 6 h wurden auf diese Weise insgesamt 93 g Vinylidenfluorid und 216 g Hexafluorpropen nachdosiert. Zur Beendigung der Polymerisation wurde der Reaktorinhalt abgekühlt und das nicht umgesetzte Monomergemisch durch Entspannung und Evakuierung aus dem Reaktor entfernt. Der Latex wurde durch Einrühren in eine 6 %-ige Calciumchloridlösung koaguliert, mit Wasser gewaschen und 24 h bei 50°C in einem Vakuumtrockenschrank getrocknet, wobei 280 g eines weichen kautschukartigen Copolymers erhalten wurden.

Durch $^{19}$F-NMR-Analysen wurde folgende Copolymerzusammensetzung bestimmt: 17,3 mol-% Hexafluorpropen, 80,5 mol-% Vinylidenfluorid und 2,2 mol-%-(CF$_2$)$_4$-Einheiten. Bei -38 ppm (Lösungsmittel: Aceton; Standard: CFCl$_3$) wird ein Signal gefunden, das der -CH$_2$-CF$_2$-I -Gruppe zuzuordnen ist und etwa 1,2 mol-% bzw. 1,9 Gew.-% Iod entspricht. Die Sequenz -CF$_2$-CF$_2$-CF$_2$-CF$_2$-I (-59 ... -60 ppm) konnte nicht nachgewiesen werden. Durch Iodelementaranalyse wurde ein Iodgehalt von 4,8 Gew.-% bestimmt. Das bedeutet, das etwa 40 % der endständigen Ioda-

tome an einer $CF_2$-Gruppe gebunden sind.

In N,N-Dimethylacetamid (+8,7 g LiBr) wurde ein Staudingerindex [h] bei 35°C von 0,07 dl/g bestimmt.

Die Produkte aus dem Beispiel 7 und dem Vergleichsbeispiel 1 wurden jeweils 4 h in einem Glaskolben auf 100°C geheizt, wobei ein leichter Stickstoffstrom darübergeleitet wurde. Während das sehr schwach gelb gefärbte Produkt aus dem Beispiel 7 seine Farbe beibehielt, verfärbte sich das im Rohzustand farblose Produkt aus dem Vergleichsbeispiel 1 braun.

**Vergleichsbeispiel 2**

Analog der im Beispiel 8 beschriebenen Rezeptur wurde aus dem Kautschuk aus Vergleichsbeispiel 1 eine Mischung zur Überprüfung des Vernetzungsverhaltens hergestellt. Die Ergebnisse der MDR-Messung sind ebenfalls in Tabelle 3 eingetragen.

Tabelle 3

| Ergebnisse der MDR-Messungen (170°C / 30 min) an den Vulkanisationsmischungen und Zug/ Dehnungsmessungen an den Vulkanisaten aus Beispiel 8 und Vergleichsbeispiel 2 | | |
|---|---|---|
| Beispiel | 8 | |
| Vergleichsbeispiel | | 2 |
| s' min [dNm] | ≤0,01 | ≤0,01 |
| s' max [dNm] | 34,2 | 31,2 |
| t 50 [min] | 1,73 | 2,0 |
| Zugfestigkeit [N/mm$^2$] | 13,2 | 6,9 |
| Dehnung [%] | 51 | 26 |
| Härte / Shore A | 89 | 89 |

Die Gegenüberstellung zeigt, daß das erfindungsgemäße Produkt bei etwa gleicher Vernetzungsdichte (vgl. Shore-Härten und s'max) eine deutlich höhere Festigkeit und Bruchdehnung als das nicht erfindungsgemäße Vergleichsbeispiel 2 besitzt.

**Vergleichsbeispiel 3**

Die Polymerisation wurde in analoger Weise wie im Vergleichsbeispiel 1 bei 80°C durchgeführt, wobei anstelle des 1,4-Diiod-perfluorbutans 20 g Diiodmethan vorgelegt wurden. Zur Konstanthaltung des Anfangsdrucks wurden innerhalb von 6 h nur 24 g VDF und 18 g HFP nachgedrückt. Das Reaktionsgemisch enthielt weniger als 0,5 Gew.-% Feststoff, der nicht isoliert werden konnte.

**Kautschukmischung und Reaktiveinstellung**

**Beispiel 9**

In einem 300 l Z-Kneter mit Austragschnecke z.B. Fa. Linden legte man 180 kg des FKM-Polymers aus Beispiel 1 vor, plastizierte dieses bei 30 bis 50°C und gab unter Stickstoff 5,4 kg MT Ruß 990, 5,4 kg Ca(OH)$_2$, 7,2 kg TAIC 50 %, 5,4 kg Luperco 130-XL 45 (2,5-Dimethyl-2,5-(bis-t-butylperoxy)-hexin-3) zu.

Nach Homogenisieren der Masse über 1 h füllte man über die Austragsschnecke und gegebenenfalls zusätzlicher Kolbenauspreßvorrichtung bei 80 bis 100°C in 20 l Fässer unterhalb der Oberfläche weitgehend blasenfrei ab.

**Verarbeitung**

**Beispiel 10**

Ein analog zu Beispiel 9 befülltes 20 l-Faß wurde in eine Faßschmelzanlage der Fa. Nordson BM 506 eingeschlossen, über eine beheizte Leitung und Rückschlagventil mit einer Spritzgußmaschine der Fa. Arburg Typ Allrounder 500-90 270 D verbunden. Mit der Faßschmelzanlage wurde eine Temperatur von ca. 95°C vorgegeben und über die beheizte Verbindungsleitung in die Schnecke des Spritzgußautomaten gepreßt. An die Ausspritzdüse des Spritzautomaten war eine mehrteilige Form zur Hertellung einer ca. 6,2 g schweren Dichtungsmanschette mit Wandstärken von 1-2 mm, angeschlossen. Das Formnest wurde mit Hilfe einer elektrischen Heizung auf eine Temperatur von 200°C eingestellt.

Nach einer Einfahrphase wurde die vulkanisierten Dichtungsmanschetten aus den Formnestern entnommen. Die Zeit zur Formfüllung und Härtung betrug 2 min.

## Beispiel 11

Mit 5 kg des in Beispiel 9 beschriebenen peroxidhaltigen Kautschukes, das eine Massetemperatur von <5°C besitzt, stellte man mit Hilfe eines Messergranulators ein Granulat mit Teilchen des Durchmessers 4-10 mm her. Dieses Granulat füllte man in einen Dosiertrichter oberhalb eines Spritzgießautomaten mit einer Einzugsöffnung für Pulver (von der Fa. Boy SSV dipronioc/Pulver). Die auf 110°C beheizte Schnecke preßte die Kautschukmasse in die in Beispiel 11 beschriebene Form.

## Zweikomponenten-Verfahren: Master- + Vernetzer-Batch

## Beispiel 12

Abweichend zu Beispiel 9 wurde nach gleichem Verfahren eine Kautschukmasse mit Ruß, $Ca(OH)_2$ und TAIC, jedoch ohne Zugabe von Peroxid, vermischt und in 20 l Fässer abgepreßt, = Komponente A.

Gleichzeitig stellte man aus einem Polymer mit der Viskosität von 0,9 kPa.s bei 70°C eine Mischung wie in Beispiel 10 her, in der die Peroxidmenge 10 mal größer bemessen wurde, = Komponente B. Als Peroxid wurden hierbei 61 kg TRIGONOX 29-40 (Fa. FLEXSYS = 1,1-Bis(tert.-butylperoxy)-3,5,5-trimethylcyclohexan eingesetzt.

Die Kautschukmasse B wurde bei ca. 40-50°C im Kneter gemischt und aus diesem abgefüllt und auf 20°C gekühlt.

Die zuerst genannte peroxidfreie Komponente A wurde mit einer Faßschmelzanlage BM 506 bei einer Temperatur von 110°C einem beheizten Statikmischer, welcher vor der Spritzgießmaschine Fa. Arburg installiert war, zugeführt.

Gleichzeitig leitete man aus einer zweiten Faßschmelzanlage BM 506 die Komponente B mit einer Temperatur von 70°C dem beheizten Statikmischer vor der Spritzgießmaschine zu.

Die Komponenten A und B wurden im Verhältnis 9:1 dosiert.

Die ausgehärteten Dichtungsmanschetten konnten jeweils nach ca. 1 min aus der Form entnommen werden.

## Patentansprüche

1. Fluorkautschuk aus a) Vinylidenfluorid und gegebenenfalls weiteren fluorhaltigen und/oder nicht-fluorhaltigen Monomeren und b) mindestens einer Verbindung aus der Gruppe Diiodmethan, 1,2-Diiod-1,1-difluorethan, 1-Iod-2-brom-1,1-difluorethan, 1-Brom-2-iod-1,1-difluorethan und/oder 1,2-Dibrom-1,1-difluorethan,
in dem mindestens 80 % der Endgruppen die Formel $-CH_2-X$ mit X = Br und/oder I aufweisen, dieser Gehalte an Iod und/oder Brom von 1-5 Gew.-% aufweist und dieser eine komplexe Viskosität bei 100°C und $\omega = 6,3 \ s^{-1}$ von 0,01 - 30 kPa s sowie einen Temperaturindex, berechnet als Quotienten der Viskositäten bei 40 und 100°C, von 3-250 besitzt.

2. Fluorkautschuk nach Anspruch 1, dadurch gekennzeichnet, daß die Verbindung b) Diiodmethan ist.

3. Fluorkautschuk nach einem der Ansprüche 1 bis 2, dadurch gekennzeichnet, daß dieser zu gummielastischen Formkörpern vernetzt wird.

4. Fluorkautschuk nach einem oder mehreren der Ansprüche 1 bis 3, dadurch gekennzeichnet, daß dieser durch Strahlung oder mittels Peroxiden radikalisch zu gummielastischen Formkörpern vernetzbar ist.

5. Verfahren zur Herstellung von Fluorkautschuk, dadurch gekennzeichnet, daß a) Vinylidenfluorid und gegebenenfalls weitere fluorhaltige und/oder nicht-fluorhaltige Monomere in Gegenwart von b) mindestens einer Verbindung aus der Gruppe Diiodmethan, 1,2-Diiod-1,1-difluorethan, 1-Iod-2-brom-1,1-difluorethan, 1-Brom-2-iod-1,1-difluorethan und/oder 1,2-Dibrom-1,1-difluorethan und in Gegenwart eines Initiators und/oder weiterer Hilfsstoffen bei Temperaturen von 0 bis 70°C radikalisch polymerisiert wird.

6. Verfahren nach Anspruch 5, dadurch gekennzeichnet, daß die radikalische Polymerisation in wäßriger Emulsion in Gegenwart eines Redoxinitiatorsystems durchgeführt wird.

7. Verwendung von Fluorkautschuk nach einem oder mehreren der Ansprüche 1 bis 4 zur Herstellung von Beschichtungen.

8. Verwendung von Fluorkautschuken nach einem oder mehreren der Ansprüche 1 bis 4 für polymeranaloge Umsetzungen zur Substitution der Iod- oder Bromendgruppen.

9. Verfahren zur Herstellung von Fluorelastomer-Formkörpern und / oder Beschichtungen, dadurch gekennzeichnet, daß Fluorkautschuke nach einem der Ansprüche 1 bis 4, mit einem Temperaturindex der Viskosität bei 40/100°C von 3 bis 250, alleine oder im Gemisch mit mehreren Fluorkautschuken nach einem der Ansprüche 1 bis 4, bei Temperaturen von 40 bis 250 °C unter Druck in 100 bis 250 °C heiße Formen spritzgegossen und dort vernetzt werden.

## Claims

1. Fluororubber of a) vinylidene fluoride and optionally further fluorine-containing and/or non-fluorine-containing monomers, and b) at least one compound from the groups consisting of diiodomethane, 1,2-diiodo-1,1-difluoroethane, 1-iodo-2-bromo-1,1-difluoroethane, 1-bromo-2-iodo-1,1-difluoroethane and/or 1,2-dibromo-1,1-difluoroethane, in which at least 80% of the terminal groups have the formula -$CH_2$-X where X = Br and/or I, wherein the said fluororubber contains iodine and/or bromine in amounts of 1-5 wt.% and has a complex viscosity at 100°C and $\omega = 6.3$ s$^{-1}$ of 0.01-30 kPa.s, as well as a temperature index, calculated as quotient of the viscosities at 40° and 100°C, of 3-250.

2. Fluororubber according to claim 1, characterised in that the compound b) is diiodomethane.

3. Fluororubber according to claim 1 or 2, characterised in that in is crosslinked to form rubber-elastic mouldings.

4. Fluororubber according to one or more of claims 1 to 3, characterised in that it can be crosslinked by a free radical mechanism by means of radiation or peroxides to form rubber-elastic mouldings.

5. Process for producing fluororubber, characterised in that a) vinylidene fluoride and optionally further fluorine-containing and/or non-fluorine-containing monomers are polymerised by a free radical mechanism at temperatures of 0°C to 70°C in the presence of b) at least one compound from the group consisting of diiodomethane, 1,2-diiodo-1,1-difluoroethane, 1-iodo-2-bromo-1,1-difluoroethane, 1-bromo-2-iodo-1,1-difluoroethane and/or 1,2-dibromo-1,1-difluoroethane, and in the presence of an initiator and/or further auxiliaries.

6. Process according to claim 5, characterised in that the free radical polymerisation is carried out in aqueous emulsion in the presence of a redox initiator system.

7. Use of fluororubber according to one or more of claims 1 to 4 to produce coatings.

8. Use of fluororubbers according to one or more of claims 1 to 4 for polymer-type reactions to replace iodine or bromine terminal groups.

9. Process for producing fluoroelastomer mouldings and/or coatings, characterised in that fluororubbers according to one of claims 1 to 4 which have a viscosity temperature index at 40/100°C of 3 to 250 are injection moulded, either separately or in the form of mixtures with more than one fluororubber according to one of claims 1 to 4, under pressure at temperatures of 40 to 250°C, in moulds of a temperature of 100 to 250°C and crosslinked therein.

## Revendications

1. Caoutchouc fluoré de a) fluorure de vinylidène et éventuellement d'autres monomères contenant du fluor et/ou ne contenant pas de fluor et b) au moins un composé du groupe du diiodométhane, 1,2-diiodo-1,1-difluoroéthane, 1-iodo-2-bromo-1,1-difluoroéthane, 1-bromo-2-iodo-1,1-difluoroéthane et/ou 1,2-dibromo-1,1-difluoroéthane, dans lequel au moins 80% des groupes terminaux présentent la formule -$CH_2$-X avec X = Br et/ou I, cette teneur en iode et/ou brome étant de 1 à 5% en poids, et celui-ci possède une .viscosité complexe à 100°C et $\omega = 6,3\ s^{-1}$ de 0,01 à 30 kPa.s ainsi qu'un indice de température de 3 à 250, calculé comme les quotients des viscosités à 40 et 100°C.

2. Caoutchouc fluoré selon la revendication 1, caractérisé en ce que le composé b) est le diiodométhane.

3. Caoutchouc fluoré selon l'une des revendications 1 à 2, caractérisé en ce que celui-ci est réticulé en des corps moulés élastiques de caoutchouc.

4. Caoutchouc fluoré selon l'une des revendications 1 à 3, caractérisé en ce que celui-ci est réticulable en corps moulés élastiques de caoutchouc, par rayonnement ou radicalairement au moyen de peroxydes.

5. Procédé de préparation de caoutchouc fluoré, caractérisé en ce qu'on polymérise radicalairement a) le fluorure de vinylidène avec éventuellement d'autres monomères contenant du fluor et/ou ne contenant pas de fluor, en présence de b) au moins un composé du groupe du diiodométhane, 1,2-diiodo-1,1-difluoroéthane, 1-iodo-2-bromo-1,1-difluoroéthane, 1-bromo-2-iodo-1,1-difluoroéthane et/ou 1 ,2-dibromo-1,1-difluoroéthane, à des températures de 0 à 70°C, et en présence d'un initiateur et/ou d'autres agents auxiliaires.

6. Procédé selon la revendication 5, caractérisé en ce que l'on effectue la polymérisation radicalaire en émulsion aqueuse en présence d'un système initiateur redox.

7. Utilisation de caoutchouc fluoré selon l'une ou plusieurs des revendications 1 à 4 pour la fabrication de revêtements.

8. Utilisation de caoutchoucs fluorés selon l'une ou plusieurs des revendications 1 à 4 pour la transformation en polymères analogues par substitution des groupes iodés ou bromés.

9. Procédé de préparation de corps moulés et / ou de revêtements en élastomère fluoré, caractérisé en ce que des caoutchoucs fluorés selon l'une des revendications 1 à 4, avec un indice de température de viscosité à 40 / 100°C de 3 à 250, seuls ou en mélange avec plusieurs caoutchoucs fluorés selon l'une des revendications 1 à 4, sont moulés par injection à des températures de 40 à 250°C sous pression dans des moules chauds de 100 à 250°C et là sont réticulés.